Europäisches Patentamt

European Patent Office

Office européen des brevets

(11) Numéro de publication: **0 044 815**
**A1**

(12) # DEMANDE DE BREVET EUROPEEN

(21) Numéro de dépôt: **81810297.2**

(22) Date de dépôt: **20.07.81**

(51) Int. Cl.³: **B 23 B 13/12**
**B 23 B 13/02**

(30) Priorité: **18.07.80 CH 5499/80**

(43) Date de publication de la demande:
**27.01.82 Bulletin 82/4**

(84) Etats contractants désignés:
**CH DE FR GB IT LI SE**

(71) Demandeur: **SAMECA S.A.**
**7 rue Fritz Oppliger**
**CH-2500 Bienne 6(CH)**

(72) Inventeur: **Vandevoir, Claude**
**Vignolans 5**
**CH-1520 La Neuveville(CH)**

(72) Inventeur: **Geiser, Marc**
**La Colline 306**
**CH-2603 Péry(CH)**

(74) Mandataire: **Tordion, Serge**
**Cabinet de Conseil en brevets 23, rue du Marché-Neuf**
**Case postale 182**
**CH-2500 Bienne 3(CH)**

(54) **Equipement de guidage des barres dans un tour automatique.**

(57) Les tubes de guidage (18, 32) de l'équipement pour assurer le guidage des différentes barres de matière qui peuvent être usinées dans un tour automatique portent des collerettes (19, 33) et un embout (20, 34), qui ont tous le même diamètre extérieur. Cela permet de fixer à volonté l'un ou l'autre de ces tubes (18, 32) sur les sièges semi-cylindriques (9) de chevalets (7, 8) solidaires d'un même chéneau prismatique (1) à l'aide d'étriers amovibles (27). Le chéneau (1) confère une grande rigidité au tube (18, 32) qui lui est fixé. Grâce à une goupille (22) des embouts (20, 34) pénétrant dans une encoche (23) du chevalet (8), des forures (25, 24) sont mises automatiquement en communication avec des conduites (11, 15) pour assurer la commande du poussoir faisant avancer la barre en travail dans le tour et former un coussin d'huile autour de cette barre.

EP 0 044 815 A1

FIG. 1

- 1 -

# EQUIPEMENT DE GUIDAGE DES BARRES DANS UN TOUR AUTOMATIQUE

Comme les barres de matière chargées dans la broche de poupée des tours automatiques sont beaucoup plus longues que cette broche, il importe d'en soutenir la partie s'étendant à l'arrière du tour de façon à empêcher qu'elle ne gigote outre mesure sous les effets combinés du fléchissement dû au poids propre et de la force centrifuge produite par la rotation de la broche. Cela se fait généralement en emprisonnant cette partie de la barre de matière en travail dans un tube de guidage tenu par deux montants dans l'alignement de la broche de poupée du tour et en maintenant rempli d'huile l'espace libre du tube de guidage autour de la barre de matière.

Si le coussin d'huile ainsi formé dans le tube de guidage autour de la barre de matière est relativement efficace lorsque le diamètre de la barre n'est que de quelques millimètres inférieur à l'alésage du tube de guidage, il s'avère insuffisant, voire totalement inopérant, quand la différence entre les diamètres de la barre et du tube est plus grande. Il est, en effet, courant d'usiner des barres de différents diamètres dans un tour automatique donné, les plus petites ayant un diamètre égal environ au quart de la capacité du tour. Ainsi, dans un tour ayant une capacité de 80 mm, on u-

sine encore parfois des barres de 20 mm seulement. Compte tenu de ces conditions de travail, des équipements comprenant plusieurs tubes de guidage de différents diamètres ont été créés pour assurer le guidage des différentes barres de matière qui peuvent être usinées dans un tour automatique, en évitant de trop grandes différences entre les diamètres de la barre en travail et l'alésage du tube de guidage.

Les différents tubes de guidage des équipements connus, qui correspondent au préambule de la revendication 1, sont conçus sous forme de réducteurs successifs. Ces équipements connus comprennent ainsi un premier tube de guidage dont l'alésage a un diamètre moins de 5 mm plus grand que le diamètre des barres correspondant à la capacité maximum du tour. Ce tube est tenu dans l'alignement de la broche de poupée du tour de la façon conventionnelle, c'est-à-dire par deux montants. Les autres tubes de cet équipement connu sont progressivement plus petits, de façon à pouvoir être enfilés l'un dans l'autre en qualité de réducteurs successifs. Pour usiner une barre de petit diamètre dans un tour donné de grande capacité, il peut ainsi y avoir jusqu'à cinq tubes de guidage l'un dans l'autre. Un petit tube de guidage est tenu dans l'alignement de la broche de poupée du tour par le tube de guidage suivant, dans lequel il est enfilé avec interposition de garnitures tendres qui entourent le petit tube de distance en distance, tout au long de celui-ci.

Ces équipements connus ont toutefois des défauts. Outre le fait que la mise en place d'un tube réducteur

- 3 -

est délicate en raison du risque d'en déplacer ou même d'en écorcher les garnitures qui l'entourent, et que le retrait d'un tel tube est salissant en raison de l'huile qui se trouve dans les espaces annulaires entre les différents tubes coaxiaux, ces équipements connus ne neutralisent pas la vibration des barres en travail dans tous les cas comme il conviendrait. Il arrive, en effet, surtout dans le cas des barres de fort diamètre (60 mm et plus), qu'à certaines vitesses de rotation, conditionnées par les vitesses de coupe, la barre en travail entre en résonnance et fasse alors vibrer le tube de guidage avec elle, de sorte que ce dernier ne remplit plus son rôle.

L'équipement selon l'invention est exempt de ces défauts. Il ne comprend jamais qu'un seul tube de guidage en service à la fois. Les complications assorties à la mise en place et au retrait des réducteurs connus sont donc éliminées. Grâce à la liaison du tube de guidage en service, qui est définie par la caractéristique de la revendication 1, ce tube constitue un guidage rigide de la partie de la barre en travail qui s'étend à l'arrière du tour, en ce sens que l'amplitude des vibrations de cette barre reste strictement limitée aux dimensions nominales de l'alésage du tube sans qu'il soit nécessaire de prévoir celui-ci avec une paroi anormalement épaisse.

Les formes spéciales d'exécution définies par la revendication 2 sont intéressantes du fait que le même élément de renforcement sert à tous les tubes de l'équipement. Il peut donc être monté à demeure à l'arriè-

- 4 -

re d'un tour. Vu l'amovibilité de la fixation des tubes de guidage à cet élément de renforcement, les manutentions lors des changements de tube s'en trouvent allégées. L'entreposage des tubes de l'équipement qui ne sont pas en service en est aussi simplifié.

La revendication 3 couvre des formes spéciales d'exécution dans lesquelles le changement du tube de guidage est particulièrement simple. L'uniformité des collerettes fixées aux tubes de guidage et des sièges des chevalets de l'élément de renforcement a, en effet, pour conséquence que l'alignement du tube de guidage mis en service, sur la broche de poupée du tour ne requiert aucune mesure d'ajustement; il est réalisé par le seul fait de déposer les collerettes des tubes sur les sièges des chevalets correspondants.

Dans les formes spéciales d'exécution définies par la revendication 4, la confection des collerettes des tubes et des sièges des chevalets est particulièrement aisée.

Les étriers basculants définis par la revendication 5 ont l'avantage de permettre la mise en place d'un tube de guidage et son enlèvement en le déplaçant perpendiculairement à son axe, et non plus parallèlement à cet axe, comme dans le cas des équipements connus à tubes réducteurs pour lesquels il fallait ménager à côté du tour, en avant du tube de guidage en service dont on bascule l'extrémité antérieure pour son chargement, une place libre beaucoup plus grande que pour ce seul chargement, puisque les tubes de guidage sont plus

- 5 -

longs que les barres de matière à cause du poussoir qu'ils doivent contenir pour assurer l'alimentation de la barre de matière jusqu'à épuisement, sans que l'extrémité postérieure de ce poussoir sorte du tube de guidage.

Il ressort des formes spéciales d'exécution définies par la revendication 6, que le poussoir du tube de guidage en service peut, sans complication aucune, être actionné de la façon qui, en pratique, s'est révélée être la plus judicieuse.

Grâce au mécanisme de repérage défini par la revendication 7, les connexions assurant l'amenée d'huile autour de la partie de la barre de matière en travail, qui est contenue dans le tube de guidage, ne nécessitent aucune manœuvre supplémentaire; elles s'établissent d'elles-mêmes lorsque le tube de guidage est en place. Les moyens définis par la revendication 8 garantissent l'étanchéité de ces connexions.

Quelque tube de l'équipement que l'on mette en service, l'amenée d'huile dans le tube de guidage, autour de la barre en travail, et la commande du poussoir peuvent, grâce aux dérivations agencées et équipées comme le définit la revendication 9, être assurés à partir d'un même réservoir, à l'aide d'une seule et même pompe.

Le chéneau défini par la revendication 10 peut être fabriqué très simplement, par pliage d'une bande de tôle métallique. Ses faces planes ont, en outre, l'avantage de raidir le tube de guidage dans plusieurs directions déterminées par ces faces, ce qui en assure la rigidité. La conduite d'huile pour la commande du poussoir ainsi que les dérivations et les vannes formant le coussin de la barre en travail dans le tube de guidage peuvent y être logées. Enfin, ce chéneau peut recueillir l'huile s'écoulant de l'extrémité antérieure du tube de guidage et en assurer le retour au réservoir d'où elle est sortie.

Une forme d'exécution de l'équipement selon l'invention est représentée schématiquement et à titre d'exemple au dessin, dans lequel :

la Fig. 1 en est une coupe longitudinale, et

la Fig. 2 une coupe transversale selon la ligne II-II de la Fig. 1.

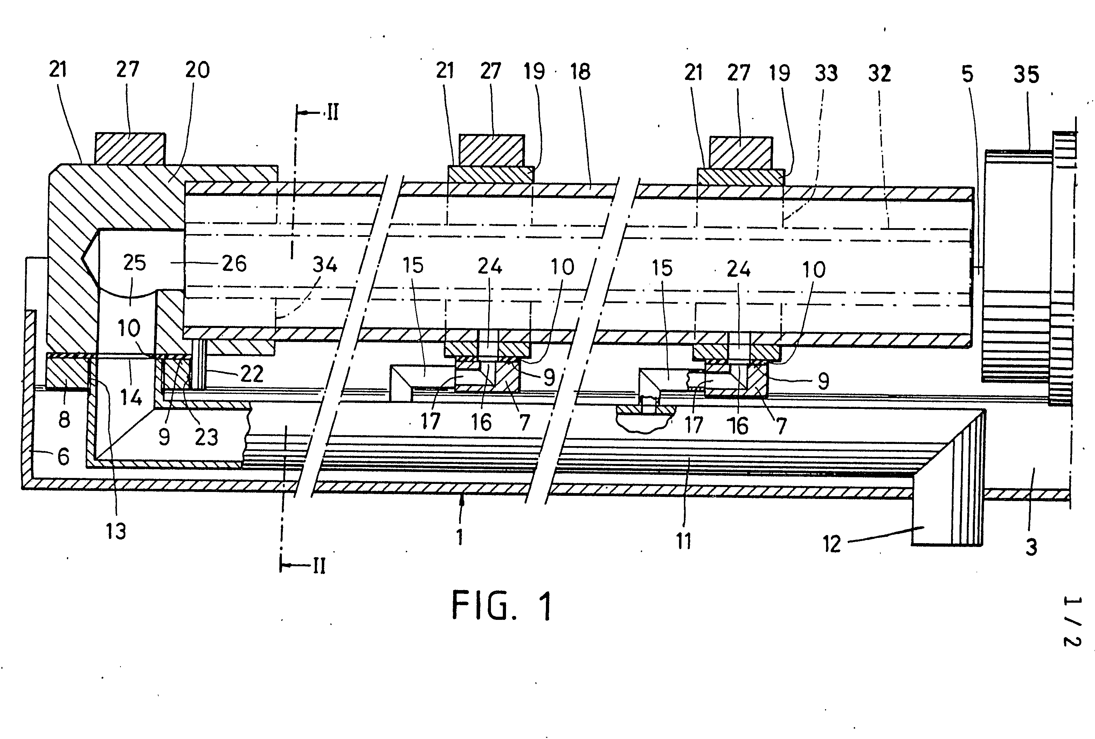

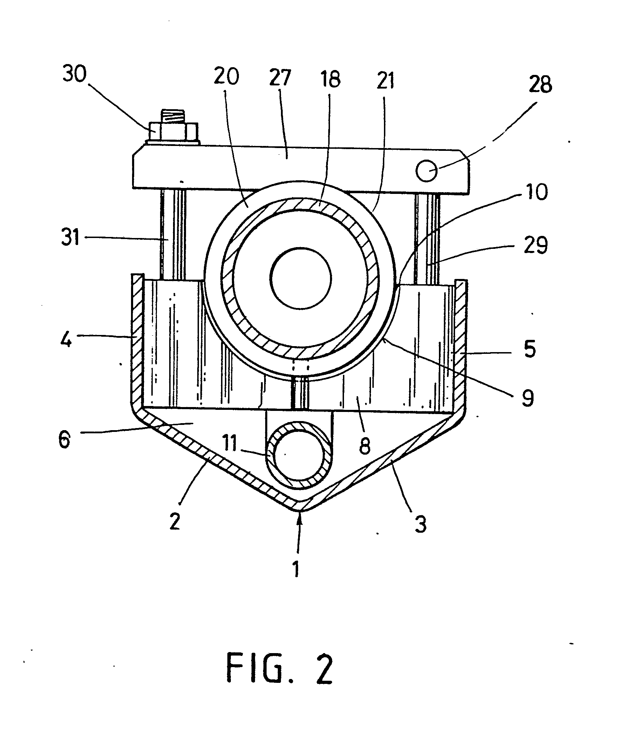

L'équipement représenté au dessin comprend un chéneau 1 de forme prismatique. Son fond est composé de deux faces planes 2, 3 en V (Fig. 2) et ses flancs 4, 5, plans, sont verticaux. Cette forme peut être obtenue aisément par pliage d'une bande de tôle métallique. A ses extrémités, le chéneau 1 est fermé, comme le montre la Fig. 1 en 6 à l'extrémité postérieure, seule visible au dessin. Le chéneau 1 est tenu à l'arrière d'un tour automatique (non représenté), parallèlement à l'axe de la broche de poupée de ce tour, par deux montants (non représentés), semblables à ceux qui supportent les dispositifs de guidage conventionnels de la barre de matière en travail dans un tour automatique. Comme dans le cas des dispositifs de guidage conventionnels, le chéneau 1 peut basculer latéralement autour d'un pivot de son montant postérieur, à partir de sa position de travail, parallèle à l'axe du tour, jusque dans une position de chargement, dans laquelle son extrémité antérieure est à côté du tour.

De distance en distance le long du chéneau 1 des chevalets 7 sont fixés rigidement à ses flancs 4, 5. Un chevalet 8, plus épais que les autres, est fixé de même aux flancs 4, 5 à l'extrémité postérieure du chéneau 1. Tous ces chevalets 7, 8 présentent chacun un siège semicylindrique 9 de même rayon, qui est tapissé d'une couche mince 10 de matière molle, par exemple caoutchouteuse, de façon à former garniture d'étanchéité à des fins exposées ci-après. Une conduite 11, dans laquelle de l'huile sous pression peut être amenée par une entrée 12 traversant le fond du chéneau 1, passe sous les chevalets 7 dans le fond 2, 3 du chéneau 1. Elle aboutit à une forure radiale 13 du chevalet 8 et débouche à un orifice 14 du siège 9 de ce chevalet. L'huile sous pression est amenée à l'entrée 12 de façon connue (non représentée), à partir d'un réservoir par une pompe et un tuyau souple connecté à l'entrée 12. La conduite 11 présente des dérivations 15, dont chacune débouche à un orifice 16 de l'un des chevalets 7, en passant à travers des forures 17 de celui-ci. Des vannes doseuses (non représentées) sont intercalées dans les dérivations 15.

Le dessin montre un tube de guidage 18, qui porte des collerettes 19 et un embout 20 à son extrémité postérieure. Les faces externes 21 des collerettes 19 et de l'embout 20 sont cylindriques et elles ont toutes le même diamètre, qui est ajusté au rayon des sièges 9. Les collerettes 19 sont fixées au tube 18 en des endroits le long de celui-ci, qui correspondent aux emplacements des chevalets 7 le long du chéneau 1, de façon que chaque collerette 19 repose sur un chevalet 7, quand le tube 18 est en place comme le montre la Fig. 1. Dans cette position, l'embout 20 repose également sur le chevalet 8.

Une goupille 22, plantée dans l'embout 20, et une encoche 23 formée dans le chevalet 8, constituent un mécanisme de repérage qui permet de poser le tube 18 dans une position angulaire bien déterminée sur les chevalets 7, 8. Dans cette position, des forures radiales 24 et 25, percées respectivement à travers les collerettes 19 et le tube 18, et dans l'embout 20, se trouvent exactement en regard des orifices 16 et 14 des sièges 9 des chevalets 7, 8. L'étanchéité des joints entre les orifices 14, 16 et les forures 25, 24 est assurée par les garnitures 10. Ainsi, l'huile de la conduite 11, en passant à travers une forure axiale 26 de l'embout 20, parvient à l'extrémité postérieure du tube 18, derrière le piston ajusté à l'alésage du tube 18, qui est formé à l'extrémité postérieure d'un poussoir (non représenté) et peut commander ce poussoir de façon connue, pour faire avancer la barre de matière en travail à travers la pince de serrage de la broche de poupée du tour et pour ramener ce poussoir à l'arrière du tube 18, quand cette barre est épuisée. Par les dérivations 15, l'huile de la conduite 11 parvient aussi autour de la barre en travail, dans le tube 18. Les vannes doseuses de ces dérivations sont réglées en fonction du diamètre de la barre en travail de façon à maintenir l'intérieur du tube 18 laissé libre par la barre en travail, à l'avant du poussoir, toujours rempli d'huile. Cette huile s'écoule en permanence de l'extrémité antérieure du tube 18 dans le chéneau 1, d'où une conduite de retour (non représentée) la ramène au réservoir duquel elle était partie.

Les collerettes 19 et l'embout 20 sont fixés sur leurs sièges respectifs par des étriers 27, représentés plus en détail à la Fig. 2. D'un côté du siège 9, chaque étrier 27 est articulé par un goujon 28 à l'extrémité d'un tigeron 29 solidaire du chevalet 7, 8. L'autre extrémité de l'étrier 27 est fixée par un écrou 30 à un tigeron 31 que le chevalet 7, 8 porte de l'autre côté de son siège 9.

Pour être en mesure de guider n'importe quelle barre de matière pouvant être usinée dans le même tour, l'équipement selon l'invention comprend au moins un second tube de guidage 32, représenté en traits mixtes dans la fig. 1. Tandis que le tube 18 peut guider des barres de matière correspondant à la capacité maximum du tour auquel l'équipement décrit est associé, le tube 32 sert à guider les plus petites barres qu'il est encore prévu d'usiner dans ce tour, c'est-à-dire des barres dont le diamètre est environ le quart de la capacité maximum du tour.

Le tube 32 est aussi garni de collerettes 33, qui sont fixées le long de ce tube, aux mêmes endroits que les collerettes 19 le long du tube 18. Ces collerettes 33 ont également une face externe cylindrique 21 qui a le même diamètre que celle des collerettes 19. Des forures radiales (non représentées), analogues aux forures 24, sont aussi percées à travers les collerettes 33 et le tube 32. Ce dernier porte un embout 34 qui a la même forme extérieure que l'embout 20 et qui présente les mêmes forures 25, 26.

Grâce aux collerettes 33 et à l'embout 34, le tube 32 peut être monté sur les mêmes sièges 9 des chevalets 7 que le tube 18 et y être fixé par les mêmes étriers 27. Il sera automatiquement dans l'alignement de la broche de poupée du tour, comme le tube 18. Le poussoir (non représenté) de ce tube 32 est commandé par les mêmes moyens et de la même façon que celui du tube 18 et un coussin d'huile remplira aussi l'espace libre entre la barre en travail et le tube 32.

Pour effectuer un changement de tube de guidage, les écrous 30 de tous les étriers 27 sont dévissés et ces étriers sont ensuite basculés à l'extérieur du chéneau 1. Le tube qui était en service jusqu'ici peut alors être soulevé au-dessus des sièges 9 et écarté du chéneau 1 sans qu'il soit nécessaire de prévoir une place libre spéciale à côté du tour, comme dans le cas des équipements connus, comprenant des tubes réducteurs à enfiler l'un dans l'autre. Quant au nouveau tube à mettre en place, il suffit pour cela de le présenter au-dessus du chéneau 1 et d'en déposer les collerettes sur les sièges 9 des chevalets 7, en veillant que la goupille 22 de l'embout 34 de ce tube soit dans l'encoche 23 du chevalet 8. En vissant à nouveau les étriers 27 sur les tigerons 31 à l'aide des écrous 30, le nouveau tube sera fixé au chéneau 1 comme le précédent.

L'équipement selon l'invention peut comprendre encore d'autres tubes de guidage ayant des diamètres compris entre ceux des tubes 18 et 32. Pour pouvoir les fixer au chéneau 1, il suffit que ces tubes soient garnis de collerettes et d'embouts ayant les mêmes dimensions externes que les collerettes 19 et 33 et les embouts 20 et 34. Toutefois, si des moyens 35, semblables à ceux qui font l'objet de la demande de brevet N° 5182/80 intitulée : "Dispositif de guidage d'une barre de matière au cours de son usinage dans un tour automatique" et qui sont désignés par la référence 27 dans cette demande-là, sont insérés entre le tube de guidage fixé au chéneau 1 et le tour, deux, au maximum trois tubes de guidage suffisent pour assurer un guidage satisfaisant de toutes les barres de matière qui peuvent être usinées dans le tour à l'arrière duquel est monté le chéneau 1.

En raison de sa configuration, ce chéneau raidit le tube de guidage qui lui est fixé dans les trois directions parallèles à ses faces planes 2, 3 et 4, 5. Ce tube a, de ce fait, une rigidité telle que les vibrations de la barre en travail le laissent immobile, même si cette barre entre en résonnance. Les tubes de guidage de l'équipement selon l'invention neutralisent donc efficacement les vibrations de la barre en travail dans le tour.

Bien que les formes cylindriques des collerettes

- 12 -

et embouts, et semi-cylindriques des sièges correspondants soient les plus simples à réaliser, il est bien clair que ces pièces pourraient avoir une autre forme, par exemple polygonale, pourvu que collerettes et embouts de tous les tubes d'un équipement aient les mêmes dimensions extérieures et que les sièges des chevalets du chéneau de cet équipement aient une forme correspondante.

Enfin, le circuit de formation du coussin d'huile dans le tube de guidage en service, autour de la barre en travail, pourrait, bien sûr, être indépendant du circuit de commande du poussoir, et ce dernier être commandé par un autre fluide que de l'huile.

- 13 -

## REVENDICATIONS :

1.   Equipement pour assurer le guidage des différentes barres de matière qui peuvent être usinées dans un tour automatique, comprenant au moins deux tubes de guidage de diamètres différents, chacun pouvant être monté dans l'alignement de la poupée du tour afin de supporter la partie qui s'étend à l'arrière du tour d'une barre de matière en travail, caractérisé en ce que des organes de fixation (7, 8, 27) disposés en au moins trois points répartis le long du tube de guidage (18, 32) en service relient rigidement ce tube à un élément de renforcement (1) s'étendant sur toute la longueur du tube.

2.   Equipement selon la revendication 1, caractérisé en ce que les dits organes de fixation (7, 8, 27) sont solidarisés à l'élément de renforcement (1) et sont agencés de façon à assurer une fixation amovible (28, 30) du tube de guidage (18, 32) en service, afin que n'importe lequel des tubes de guidage de l'équipement puisse, au choix, être fixé au même élément de renforcement (1).

3.   Equipement selon la revendication 2, caractérisé en ce que chaque tube de guidage (18, 32) de l'équipement est garni de collerettes (19, 33) qui sont fixées en des endroits précis le long du tube, les mêmes pour tous les tubes de l'équipement, les collerettes de tous les tubes de l'équipement ayant toutes les mêmes dimensions extérieures (21), et en ce que chacun des dits organes de fixation comprend, d'une part, un chevalet (7,

- 14 -

8) solidaire de l'élément de renforcement (1), pour l'une des collerettes de chacun des tubes de l'équipement, chaque chevalet présentant un siège (9) ajusté aux collerettes des tubes, et, d'autre part, un étrier (27) associé à chaque chevalet pour fixer la collerette correspondante du tube de guidage en service dans le siège (9) de ce chevalet.

4. Equipement selon la revendication 3, caractérisé en ce que les dites collerettes (19, 33) présentent une face extérieure cylindrique (21) et en ce que les sièges (9) des dits chevalets (7) sont semi-cylindriques.

5. Equipement selon la revendication 3 ou 4, caractérisé en ce que chacun des dits étriers (27) est articulé (28) par l'une de ses extrémités sur le chevalet (7, 8) correspondant, d'un côté du siège (9) de ce dernier, de façon à pouvoir basculer entre une position ouverte, libérant l'accès au siège du chevalet pour l'une des collerettes (19, 33) des tubes de guidage (18, 32), et une position fermée, l'autre extrémité de l'étrier étant fixée amoviblement (30) au chevalet de l'autre côté de son siège.

6. Equipement selon la revendication 3 ou 4 ou 5, dont chaque tube de guidage contient un poussoir destiné à être actionné hydrauliquement, caractérisé en ce que l'extrémité postérieure de chaque tube de guidage (18, 32) de l'équipement est coiffée d'un embout (20, 34) qui présente des forures (25, 26) permettant l'arrivée d'un fluide sous pression dans le tube 18, 32) à l'arrière du poussoir et qui a les mêmes dimensions extérieures que les dites collerettes (19, 33) des tubes de guidage, et en ce qu'un chevalet (8), semblable aux autres, est fixé au dit élément de renforcement (1) pour recevoir l'embout du tube de guidage mis en service.

7.    Equipement selon la revendication 6, comprenant une amenée d'huile dans le tube en service, destinée à remplir l'espace libre entre la barre de matière en travail et la paroi du tube de guidage en service, caractérisé par un mécanisme de repérage (22, 23) agencé de façon que chacun de ces tubes (18, 32) ne puisse être mis en place que dans une position angulaire bien déterminée, et par des forures radiales (24, 25) percées, d'une part, à travers les dites collerettes (19, 33) et les dits tubes (18, 32), et, d'autre part, dans les dits embouts (20, 34) de façon à se trouver en regard d'orifices (16, 14) débouchant dans le siège (9) des dits chevalets (7, 8) et à assurer ainsi automatiquement le passage du fluide de commande du poussoir et l'arrivée d'huile autour de la barre en travail dès que l'un des dits tubes (18, 32) est placé sur les dits chevalets dans la dite position angulaire.

8.    Equipement selon la revendication 7, caractérisé en ce que le siège (9) des dits chevalets (7, 8) est tapissé d'une mince couche de matière molle (10) afin de rendre étanche le passage des dits orifices (14, 16) aux dites forures radiales (25, 24).

9.    Equipement selon la revendication 7 ou 8, dans lequel le fluide de commande du poussoir est de l'huile, caractérisé en ce que l'huile amenée autour de la barre en travail arrive aux orifices (16) débouchant dans les sièges (9) des chevalets (7) pour les dites collerettes (19, 33) à partir de dérivations (15) de la conduite (11) amenant l'huile à l'orifice (14) du siège (9) pour l'embout (20, 34) du tube en service, une vanne doseuse étant intercalée dans chacune des dites dérivations.

10. Equipement selon l'une ou l'autre des revendications précédentes, caractérisé en ce que le dit élément de renforcement est constitué par un chéneau (1) à faces planes (2, 3, 4, 5).

FIG. 1

0044815

1 / 2

FIG. 2

**Office européen
des brevets**

**RAPPORT DE RECHERCHE EUROPEENNE**

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| A | WERKSTATT UND BETRIEB, vol. 110, no. 12, décembre 1977, Carl Hanser Verlag München, DE "Gerauscharme Stangenführung", pages 903-904 <br> * Pages 903,904; figure 1 * <br> -- | 1 | B 23 B 13/12 <br> 13/02 |
| A | CH - A - 126 454 (HUBER) | | |
| A | DE - A - 2 110 709 (HAGENUK) | | |
| A | FR - A - 2 314 792 (ALECOOP) | | DOMAINES TECHNIQUES RECHERCHES (Int. Cl.³) |
| A | FR - A - 1 274 070 (CINCINNATI) | | B 23 B 13/00 |
| A | FR - A - 979 687 (SKODA) <br> ---- | | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | | |
|---|---|---|
| Le présent rapport de recherche a été établi pour toutes les revendications | | |
| Lieu de la recherche <br> La Haye | Date d'achèvement de la recherche <br> 15-10-1981 | Examinateur <br> BOGAERT |

OEB Form 1503.1  06.78